# EUROPÄISCHE PATENTANMELDUNG

(11) **EP 1 580 854 A1**
(43) Veröffentlichungstag der Anmeldung: **28.09.2005**
(21) Anmeldenummer: 05005541.7
(22) Anmeldetag: 15.03.2005
(51) Int. Cl.: H02B 1/052

(54) **Vorrichtung zum Anbrigen von Kennzeichnungsschildern in einem Schaltschrank**

(30) Priorität: 23.03.2004 DE 102004014607; 14.10.2004 DE 102004050166
(71) Anmelder: Murrplastik Systemtechnik GmbH, 71570 Oppenweiler (DE)
(72) Erfinder: Funk, Rainer, 71543 Wüstenrot (DE)
(74) Vertreter: Reule, Hanspeter

(57) **Zusammenfassung**

Die Erfindung betrifft eine Vorrichtung zur Anbringung von Kennzeichnungsschildern in einem Schaltschrank (10) mit einer Bezeichnungsschiene (18), die Aufnahmemittel (20) zur Aufnahme der Kennzeichnungsschilder aufweist. Erfindungsgemäß ist ein Sockel (24) vorgesehen, der Rastelemente (26) zum Aufrasten auf eine an einer Schaltschrankwand (12) angebrachte Montageschiene (14) für elektrische Bauelemente aufweist, sowie ein Befestigungselement (36, 50) zum Befestigen der Bezeichnungsschiene (18) am Sockel (24).

## Beschreibung

Die Erfindung betrifft eine Vorrichtung zum Anbringen von Kennzeichnungsschildern in einem Schaltschrank gemäß Oberbegriff des Anspruchs 1.

Im Inneren eines Schaltschranks ist in der Regel eine Vielzahl von elektrischen Bauelementen angeordnet, die mittels Kabeln miteinander bzw. mit außerhalb des Schaltschranks liegenden Stromquellen oder -verbrauchern verbunden sind. Zum Anbringen der elektrischen Bauelemente weist der Schaltschrank an mindestens einer seiner Wände, vorzugsweise an der Rückwand, eine oder mehrere Montageschienen auf. Die Montageschienen sind üblicherweise sogenannte H- oder C-Schienen, auf die die elektrischen Bauteile mittels einer Rastgeometrie aufgerastet bzw. aufgeklemmt werden. Zur Kennzeichnung werden die Bauelemente mit Kennzeichnungsschildern versehen. Dabei ist es möglich, an jedem Bauelement ein Kennzeichnungsschild anzubringen. Diese Art der Kennzeichnung ist jedoch aufwendig. Aus diesem Grund werden oft mehrere Kennzeichnungsschilder auf einem gemeinsamen Träger angebracht. Der Träger hat die Form einer Schiene, in die die Kennzeichnungsschilder eingelegt werden. Eine solche Bezeichnungsschiene wird dann nahe den Bauelementen an der Schaltschrankwand angebracht. Dies hat jedoch den Nachteil, dass die Bezeichnungsschienen, und damit die Kennzeichnungsschilder, teilweise durch die elektrischen Bauelemente bzw. deren Kabel verdeckt werden und somit schlecht abzulesen sind.

Es ist daher Aufgabe der Erfindung, eine Vorrichtung der eingangs genannten Art derart weiterzubilden, dass die Kennzeichnungsschilder leichter abgelesen werden können.

Die Aufgabe wird durch eine Vorrichtung mit den Merkmalen des Patentanspruchs 1 gelöst. Vorteilhafte Weiterbildungen der Erfindung sind Gegenstand der abhängigen Ansprüche.

Der Erfindung liegt der Gedanke zugrunde, die Bezeichnungsschiene mit den Kennzeichnungsschildern an derselben Montageschiene zu befestigen, an der die durch die Kennzeichnungsschilder bezeichneten Bauelemente angebracht sind. Dadurch kann die Bezeichnungsschiene in einigem Abstand zur Schaltschrankwand angeordnet werden, so dass die von den Bauelementen ausgehenden Kabel zwischen ihr und der Schaltschrankwand durchgeführt werden können und die Sicht auf die Kennzeichnungsschilder nicht verdecken. Wenn der in der Bezeichnungsschiene enthaltene Kennzeichnungsschildersatz verändert oder ergänzt werden muß, kann der Sockel auf einfache Weise von der Montageschiene abgenommen und nach Austausch der Kennzeichnungsschilder wieder an dieser befestigt werden.

In einer ersten vorteilhaften Ausführungsform weist das Befestigungselement zwei parallele Halteleisten zum Umfassen des Sockels sowie Befestigungsmittel zum Anbringen der Bezeichnungsschiene auf. Dabei weist der Sockel zweckmäßig an seiner Oberfläche Führungsprofile zum Aufschieben der Halteleiste auf. Dadurch erhält man eine besonders einfache Befestigungsmöglichkeit für die Bezeichnungsschiene, die an einer der Schaltschrankwand abgewandten Oberfläche des Sockels angebracht wird. Vorzugsweise weisen die Halteleisten Eingriffselemente zum kraft- und/oder formschlüssigen Eingreifen in Vertiefungen in der Sockeloberfläche auf. Dadurch wird eine zuverlässige Befestigung des die Bezeichnungsschiene tragenden Befestigungselements am Sockel gewährleistet. Zweckmäßig weisen die Halteleisten mindestens zwei Eingriffselemente in unterschiedlichen Abständen zu ihren freien Enden auf. Desweiteren kann der Sockel mehrere zueinander im Abstand angeordnete Vertiefungen zur Aufnahme der Eingriffselemente aufweisen. Beide Maßnahmen ermöglichen ein Anbringen der Bezeichnungsschiene in mehreren unterschiedlichen Abständen zur Schaltschrankwand.

Die Halteleisten sind zweckmäßig elastisch verformbar und werden beim Aufschieben auf den Sockel gegen eine Rückstellkraft auseinandergedrückt. Dies ergibt eine Klemmwirkung und somit eine festere Verbindung zwischen dem Befestigungselement und dem Sockel.

Eine weitere vorteilhafte Ausgestaltung sieht vor, dass das Befestigungselement ein Auslegerarm ist, der an seinem ersten Ende am Sockel befestigbar ist und an dessen zweitem Ende die Bezeichnungsschiene befestigbar ist. Diese Ausführungsform kann eine Alternative oder eine Ergänzung zur ersten Ausführungsform darstellen. Die Bezeichnungsschiene wird am Auslegerarm im Abstand zur Montageschiene über oder unter dieser angebracht. Vorzugsweise ist der Auslegerarm Z-förmig. Dadurch kann die Bezeichnungsschiene nahe der Schaltschrankwand positioniert werden, wobei noch ein Abstand zwischen der Bezeichnungsschiene und der Schaltschrankwand gegeben ist.

Der Sockel weist zweckmäßig mindestens ein Sackloch zum Einschieben des ersten Endes des Auslegerarms auf. Dieser weist vorzugsweise im Abstand zu seinem ersten Ende mindestens ein Rastmittel zum Verrasten mit einem komplementären Rastmittel im Sackloch des Sockels auf. Dadurch ist der Auslegerarm auf einfache Weise am Sockel befestigbar. Zweckmäßig weist der Auslegerarm mehrere im Abstand zueinander angeordnete Rastmittel auf. Dies ermöglicht eine Anbringung der am Auslegerarm gehaltenen Bezeichnungsschiene in unterschiedlichen Abständen zum Sockel und damit zur Montageschiene.

Im Folgenden wird die Erfindung anhand eines in der Zeichnung schematisch dargestellten Ausführungsbeispiels näher erläutert. Es zeigen
- Fig. 1: eine Bezeichnungsschiene in Explosionsdarstellung;
- Fig. 2a: einen Sockel;
- Fig. 2b: ein Befestigungselement gemäß einem ersten Ausführungsbeispiel;
- Fig. 2c: ein Befestigungselement gemäß einem zweiten Ausführungsbeispiel und
- Fig. 3: einen Schaltschrank mit einem Sockel, Befestigungselementen Bezeichnungsschienen.

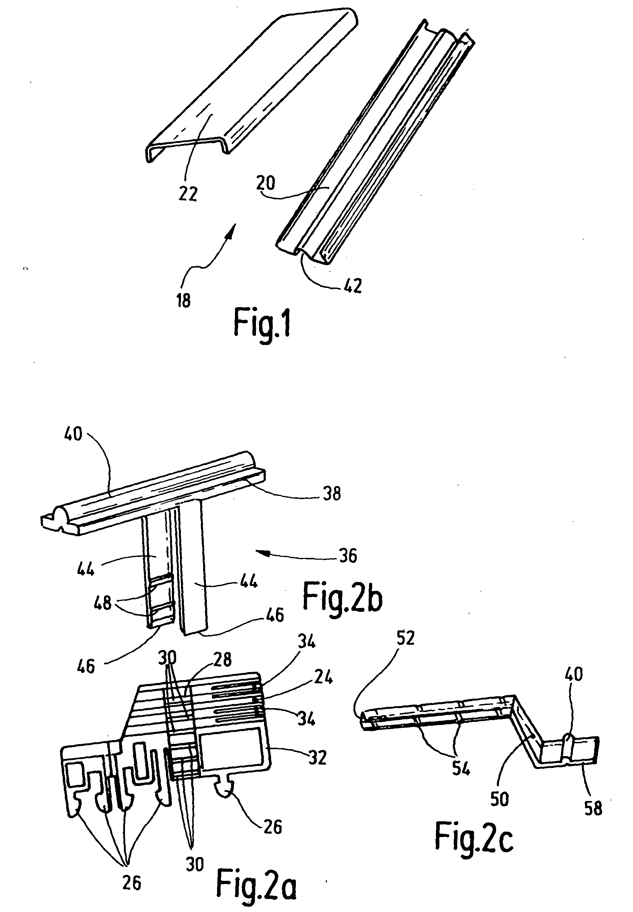

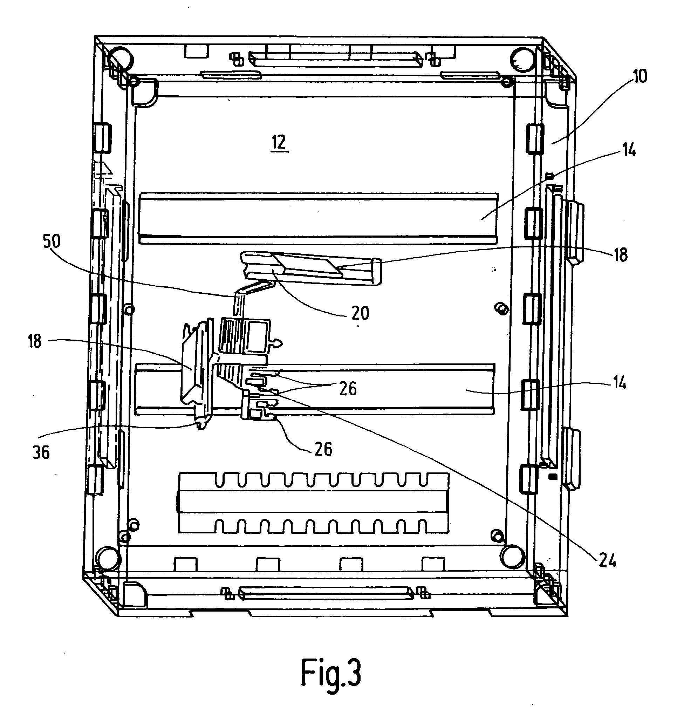

Ein Schaltschrank 10 gemäß Fig. 3 weist an seiner Rückwand 12 Montageschienen 14 zum Anbringen von elektrischen Bauelementen auf. Zur Bezeichnung der Bauelemente werden Kennzeichnungsschilder verwendet, welche in eine Bezeichnungsschiene 18 eingesetzt werden, die im Inneren des Schaltschranks angebracht wird. Die Bezeichnungsschiene 18 (Fig. 1) besteht im wesentlichen aus drei Komponenten. Zum einen weist sie einen Grundkörper 20 auf, der eine Aufnahmemulde für die Kennzeichnungsschilder bildet. Auf den Grundkörper 20 wird zur Abdeckung der Kennzeichnungsschilder eine durchsichtige Abdeckleiste 22 aufgeklemmt. Der Grundkörper 20 kann an seinen Enden zudem durch aufsetzbare Endstücke abgeschlossen sein.

Eine Vorrichtung zum Anbringen der Kennzeichnungsschilder im Schaltschrank 10 weist neben der Bezeichnungsschiene 18 einen Sockel 24 auf, an dem Rasthaken 26 angebracht sind, mit denen er auf die Montageschiene 14 aufgerastet werden kann. Der Sockel 24 weist eine langgestreckte Form auf und wird mit seiner Längsrichtung quer zur Längsrichtung der Montageschiene 14 angebracht. An seinen Breitseiten weist der Sockel 24 jeweils ein Führungsprofil 28 auf. In den Führungsprofilen sind im Abstand zueinander mehrere Vertiefungen 30 angebracht. Desweiteren weist der Sockel 24 an seiner Stirnseite 32 zwei Sacklöcher 34 auf, die bei an der Montageschiene 14 angebrachtem Sockel 24 in unterschiedlichem Abstand zur Schaltschrankwand 12 angeordnet sind. Zur Veranschaulichung seiner Anbringung ist der Sockel 24 in Fig. 3 um 90° gedreht gegenüber seiner normalen Position dargestellt. Auch die in Fig. 3 gezeigten Bezeichnungsschienen 18 sind zur Veranschaulichung gegenüber ihrer normalen Position verdreht gezeigt, teilweise in Explosionsdarstellung.

Zur Befestigung der Bezeichnungsschiene 18 am Sockel 24 können zwei verschiedene Befestigungselemente verwendet werden. Das Befestigungselement 36 gemäß Fig. 2b weist eine Befestigungsleiste 38 mit einem Klemmwulst 40 auf, auf die die Bezeichnungsschiene 18 mit einer zum Klemmwulst 40 komplementären Rille 42 aufgeklemmt werden kann. Von der Befestigungsleiste 38 aus erstrecken sich zwei zueinander parallele Halteleisten 44, die elastisch verformbar sind und deren Abstand zueinander dem Abstand der Breitseiten des Sockels entspricht oder geringfügig kleiner ist. Im Abstand zu ihren freien Enden 46 weisen die Halteleisten 44 an den einander zugewandten Innenflächen Eingriffselemente 48 auf, die zum Eingreifen in die Vertiefungen 30 im Sockel 24 bestimmt sind. Zum Anbringen der Bezeichnungsschiene 18 am Sockel 24 wird diese auf das Befestigungselement 36 aufgerastet, welches am Sockel befestigt wird, indem die Halteleisten 44 auf die Führungsprofile 28 aufgeschoben werden.

Gemäß einem zweiten Ausführungsbeispiel (Fig. 2c) ist ein Befestigungselement in Form eines Auslegerarms 50 vorgesehen. Der Auslegerarm 50 ist Z-förmig und weist an seinem ersten Ende 52 eine Außenkontur auf, die komplementär zur Innenkontur der Sacklöcher 34 ist. Im Abstand zum ersten Ende 52 sind im Auslegerarm 50 Vertiefungen 54 eingeformt, in die zum Befestigen des Auslegerarms 50 am Sockel 24 Vorsprünge in den Sacklöchern 34 eingreifen. Der Auslegerarm 50 weist mehrere Vertiefungen 54 auf, die in unterschiedlichen Abständen zum ersten Ende 52 angeordnet sind. An seinem zweiten Ende 58 trägt der Auslegerarm 50 wiederum einen Klemmwulst 40 zum Aufklemmen der Bezeichnungsschiene 18.

Zusammenfassend ist folgendes festzuhalten:
Die Erfindung betrifft eine Vorrichtung zur Anbringung von Kennzeichnungsschildern in einem Schaltschrank 10 mit einer Bezeichnungsschiene 18, die Aufnahmemittel 20 zur Aufnahme der Kennzeichnungsschilder aufweist. Erfindungsgemäß ist ein Sockel 24 vorgesehen, der Rastelemente 26 zum Aufrasten auf eine an einer Schaltschrankwand 12 angebrachte Montageschiene 14 für elektrische Bauelemente aufweist, sowie ein Befestigungselement 36, 50 zum Befestigen der Bezeichnungsschiene 18 am Sockel 24.

## Patentansprüche

1. Vorrichtung zum Anbringen von Kennzeichnungsschildern in einem Schaltschrank (10) mit einer Bezeichnungsschiene (18), die Aufnahmemittel (20) zur Aufnahme der Kennzeichnungsschilder aufweist, **gekennzeichnet durch** einen Sockel (24), der Rastelemente (26) zum Aufrasten auf eine an einer Schaltschrankwand (12) angebrachte Montageschiene (14) für elektrische Bauelemente aufweist, und ein Befestigungselement (36, 50) zum Befestigen der Bezeichnungsschiene (18) am Sockel (24).

2. Vorrichtung nach Anspruch 1, **dadurch gekennzeichnet, dass** das Befestigungselement (36) zwei parallele Halteleisten (44) zum Umfassen des Sockels (24) sowie Befestigungsmittel (40) zum Anbringen der Bezeichnungsschiene (18) aufweist.

3. Vorrichtung nach Anspruch 2, **dadurch gekennzeichnet, dass** der Sockel (24) an seiner Oberfläche Führungsprofile (28) zum Aufschieben der Halteleisten (44) aufweist.

4. Vorrichtung nach Anspruch 2 oder 3, **dadurch gekennzeichnet, dass** die Halteleisten (44) Eingriffselemente (48) zum kraft- und/oder formschlüssigen Eingreifen in Vertiefungen (30) in der Sockeloberfläche aufweisen.

5. Vorrichtung nach Anspruch 4, **dadurch gekennzeichnet, dass** die Halteleisten (44) jeweils mindestens zwei Eingriffselemente (48) in unterschiedlichen Abständen zu ihren freien Enden (46) aufweisen.

6. Vorrichtung nach einem der Ansprüche 4 oder 5, **dadurch gekennzeichnet, dass** der Sockel (24) mehrere zueinander im Abstand angeordnete Vertiefungen (30) zur Aufnahme der Eingriffselemente (48) aufweist.

7. Vorrichtung nach einem der Ansprüche 2 bis 6, **dadurch gekennzeichnet, dass** die Halteleisten (44) elastisch verformbar sind und beim Aufschieben auf den Sockel (24) gegen eine Rückstellkraft auseinandergedrückt werden.

8. Vorrichtung nach Anspruch 1, **dadurch gekennzeichnet, dass** das Befestigungselement ein Auslegerarm (50) ist, der an seinem ersten Ende (52) am Sockel (24) befestigbar ist und an dessen zweitem Ende (58) die Bezeichnungsschiene (18) befestigbar ist.

9. Vorrichtung nach Anspruch 8, **dadurch gekennzeichnet, dass** der Auslegerarm (50) Z-förmig ist.

10. Vorrichtung nach Anspruch 8 oder 9, **dadurch gekennzeichnet, dass** der Sockel (24) mindestens ein Sackloch (34) zum Einschieben des ersten Endes (52) des Auslegerarms (50) aufweist.

11. Vorrichtung nach Anspruch 10, **dadurch gekennzeichnet, dass** der Auslegerarm (50) im Abstand zu seinem ersten Ende (52) mindestens ein Rastmittel (54) zum Verrasten mit einem komplementären Rastmittel im Sackloch (34) des Sockels (24) aufweist.

12. Vorrichtung nach Anspruch 11, **dadurch gekennzeichnet, dass** der Auslegerarm (50) mehrere im Abstand zueinander angeordnete Rastmittel (54) aufweist.
